# EUROPEAN PATENT APPLICATION

(11) **EP 4 678 369 A1**
(43) Date of publication of application: **14.01.2026**
(21) Application number: 24770277.2
(22) Date of filing: 05.02.2024
(51) Int. Cl.: B29C 33/32, B23Q 3/154, H01F 7/04

(54) **MAGNETIC CLAMP DEVICE**

(30) Priority: 10.03.2023 JP 2023037193
(71) Applicant: Kosmek Ltd., Kobe-shi, Hyogo 651-2241 (JP)
(72) Inventor: AKAMATSU Hiroshi, Kobe-city, Hyogo 651-2241 (JP)
(74) Representative: Kramer Barske Schmidtchen Patentanwälte PartG mbB
(86) International application number: PCT/JP2024/003684
(87) International publication number: WO 2024/190157

(57) **Abstract**

To provide a magnetic clamp device having search coils, wherein the detection accuracies of the search coils are made constant regardless of the positions of the search coils that are connected in series. A search coil 26 is wound around each one of core members of a plurality of magnet clamps 11. The magnet clamps 11 are each housed in an installation hole 13 bored in a plate 10, and a communication hole 14 is bored so as to extend across two adjacent installation holes 13. The search coils 26 are connected in series so as to have an outward path connecting from the most upstream search coil 26 to the most downstream search coil 26 and a return path connecting from the most downstream search coil 26 to the most upstream search coil 26 by turning back in the outward path. With respect to each search coil 26, a conductor w1 of less than one turn connected from a terminal s1 to a terminal s2 in the outward path than one turn in the return path corresponding to the conductor w1 is wound around the core member in the reverse direction.

## Description

### TECHNICAL FIELD

The present invention relates to a magnetic clamp device having a search coil for detecting a change in the adsorption state of a mold magnetically adsorbed to the magnetic clamp device.

A plate of the magnetic clamp device which uses magnetic attraction to fix the mold to the injection molding machine is attached to a platen of an injection molding machine. The plate of the magnetic clamp device is made of a magnetic body and has a number of installation holes drilled therein, and a magnet clamp having a magnet whose polarity cannot be reversed (neodymium magnet) and a magnet whose polarity cannot be reversed (alnico magnet) is embedded in each hole. The magnet clamp can switch between a magnetic circuit that closes within the plate and a magnetic circuit that passes through the mold by controlling the magnetic polarity of the alnico magnet with a coil.

The magnet clamp is equipped with a search coil as shown in, for example, Patent Document 1. The search coil is a coil that detects a change in magnetic flux caused by peeling of the mold, and is placed on each of a plurality of magnet clamps and wound around the magnet clamp by one to several turns. By connecting search coils of several magnet clamps in series, the magnetic flux is measured in a predetermined range.

### PRIOR ART LITERATURE

### PATENT LITERATURE

Patent Document 1: Japanese Patent No. 5301117

### DISCLOSURE OF THE INVENTION

### PROBLEMS TO BE SOLVED BY THE INVENTION

In order to control a plurality of magnet clamps, the plate is provided with communication holes that connect the installation holes for wiring control lines. The location of the communication holes is limited in order to allow a large amount of magnetic flux to pass through the plate. When using a search coil that goes around the magnet clamp, if the search coils connected in series are arranged in a straight line, each search coil will make one turn around each magnet clamp and then make another half turn. In each of the one and a half turn search coils, the magnetic flux generated by each magnet clamp passes through one turn of the coil and generates an electromotive force. Furthermore, an electromotive force is generated in the coil for the half turn due to the effect of the magnetic flux (this electromotive force depends greatly on the radius of the coil).

On the other hand, the position of the search coil is determined by the arrangement of a magnet block, but when connecting the search coils in series, the search coils arranged above, below, left and right must be connected to each other. In this case, an incomplete conductor, such as a half turn or a quarter turn, is added to the search coil. This incomplete conductor causes the electromotive force induced by the magnetic flux of the magnet clamp to vary depending on the position of each search coil. This means that each search coil cannot generate a constant electromotive force in response to a constant change in magnetic flux, namely meaning that the detection accuracy is not constant.

The object of the present invention is to provide a magnetic clamp device having search coils in which the detection accuracy of each search coil is constant regardless of the position of the search coils connected in series.

### MEANS TO SOLVE THE PROBLEM

A magnetic clamp device of the present invention includes a plurality of magnet clamps each having a magnetic pole surrounded by a non-reversible magnet whose polarity cannot be reversed and a reversible magnet whose polarity can be reversed and which is placed on the lower surface of the magnetic pole; a plurality of search coils each wound around a core member of the plurality of magnet clamps; and a plate made of a magnetic body having a plurality of installation holes for accommodating the plurality of magnet clamps and a plurality of communication holes spanning two adjacent installation holes, wherein the search coils accommodated in each of installation holes are connected in series via the communication hole that spans the installation holes, wherein a connection path of the search coils connected in series includes an outward path connecting the most upstream search coil to the most downstream search coil, and a return path turning around the outward path to connect the most downstream search coil to the most upstream search coil, and wherein each of the search coils in the connection path has a conductor wound around the core member with less than one turn connecting from an upstream terminal to a downstream terminal on the outward path, and a conductor corresponding to the conductor with less than one turn is wound around the core member in the opposite direction on the return path.

In addition, a magnetic clamp device of the present invention includes a plurality of magnet clamps each having a magnetic pole surrounded by a non-reversible magnet whose polarity cannot be reversed and a reversible magnet whose polarity can be reversed and arranged on the underside of the magnetic pole; a plurality of search coils each wound around a core member of the plurality of magnet clamps; and a plate made of a magnetic body having a plurality of installation holes for accommodating each of the plurality of magnet clamps and a plurality of communication holes spanning two adjacent installation holes, wherein the search coils accommodated in each of installation holes are connected in series via the communication hole that spans the installation holes, wherein a connection path of the search coils connected in series includes an outward path connecting the most upstream search coil to the most downstream search coil, and a return path turning around the outward path to connect the most downstream search coil to the most upstream search coil, and wherein each of the search coils has a conductor with less than one turn connected from an upstream terminal to a downstream terminal wound around the core member on the outward path, and a conductor corresponding to the shortfall of one turn due to the less than one turn of the conductor is wound around the core member in the forward direction on the return path.

### EFFECT OF THE INVENTION

To the search coil which has incomplete conductor (α portion) that is less than one turn on the outward path, by winding it in the opposite direction by that α amount on the return path, the extra induced voltage can be offset and the detection accuracy of each search coil can be made constant. Alternatively, by winding (1-α) portions in the forward direction on the return path, the incomplete conductor (α portion) of the outward path can be made into a coil for one turn, and the detection accuracy of each search coil can be made constant.

### BRIEF DESCRIPTION OF THE DRAWINGS

FIG. 1 is a view for explaining an injection molding machine, in which FIG. 1A is an overall view of the injection molding machine, and FIG. 1B is a plan view of a plate mounted on a platen of the injection molding machine.
FIG. 2 is a view showing a cross section of the plate, FIG. 2A is a view showing a partial cross section, FIG. 2B is a view showing a state in which the magnet clamp is separated from the plate, and FIG. 2C is a perspective sectional view of the plate cut along the X-X plane.
FIG. 3 is a view for explaining a conventional search coil, in which FIG. 3A is a view showing a connection path of a conventional search coil, and FIGS. 3B to 3D are views showing examples of how to wind the search coil.
FIG. 4 is a view for explaining the search coil of this embodiment, FIG. 4A is a view showing the connection path of the search coil of this embodiment, and FIGS. 4B to 4D are views showing examples of how to wind the search coil.
FIG. 5 is a view showing a specific example of a search coil, FIG. 5A is a view showing a ring-shaped substrate used for the search coil, FIG. 5B is a view showing a conductor pattern of the substrate, and FIGS. 5C to 5N are views showing various search coils made from a common substrate.
FIG. 6 is a view showing another embodiment, and FIGS. 6A to 6C are views showing examples of how to wind a search coil.

### PREFERRED EMBODIMENT OF THE INVENTION

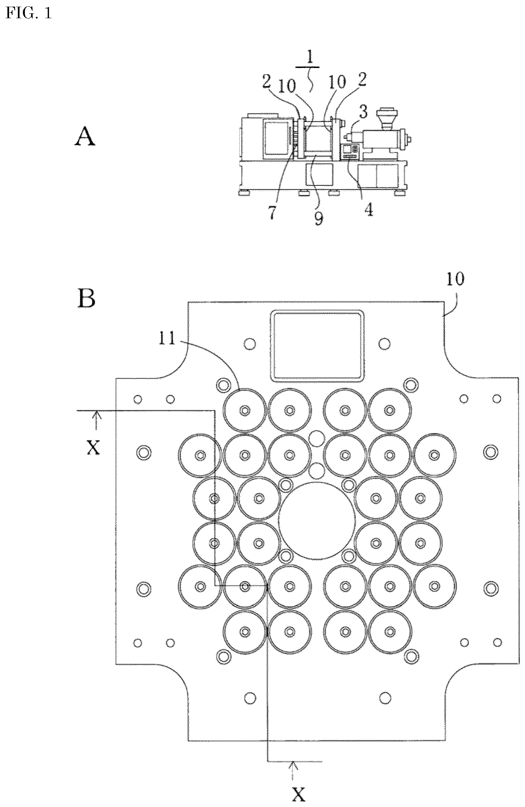

An example of embodiments of the present invention will be described. In FIG. 1A, an injection molding machine 1 includes left and right platens 2, and a guide rod 9 that guides and supports the left platen 2 so as to be movable forward and backward in the left-right direction. Each platen 2 is attached with a plate 10 that magnetically attracts a mold. Reference numeral 3 denotes a nozzle that injects resin, 4 denotes a controller with a liquid crystal display screen, and 7 denotes an ejector rod that pushes out an injection molded product from a mold M1.

FIG. 1B is a view of the plate 10 viewed from the surface. A large number of magnet clamps 11 are arranged on the front side of the plate 10. Proximity sensors and magnetic flux coils for detecting changes in magnetic flux are also arranged (not shown).

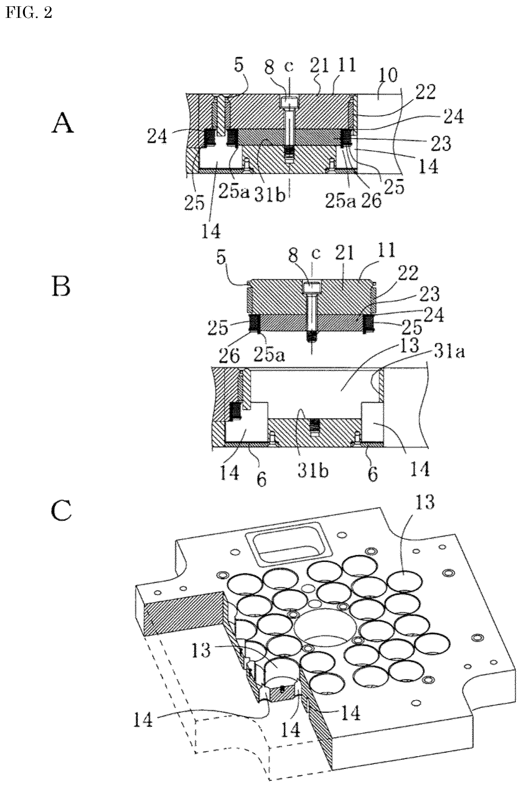

FIG. 2 is an X-X cross-sectional view of the plate 10. In FIG. 2A, the X-X plane is defined so as to cut the center of the magnet clamp 11. The plate 10 is perforated with a large number of installation holes 13 into which the magnet clamps are inserted. The plate 10 is also perforated with a large number of communication holes 14 behind the installation holes 13 so as to span two adjacent installation holes 13. Each communication hole 14 is used as a wiring space for connecting cables necessary for controlling the magnet clamp 11. Sealant 5 seals between the magnet clamp 11 and the plate 10 to prevent the intrusion of dust, water droplets, etc.

FIG. 2B shows the magnet clamp 11 separated from the plate 10. The magnet clamp 11 is cylindrical (referred to as a central axis c) and has a magnetic pole 21, a magnet with a non-reversible polarity (non-reversible magnet 22, e.g., a neodymium magnet) arranged around the magnetic pole 21, a magnet with a reversible polarity (reversible magnet 23, e.g., an alnico magnet) arranged on the underside of the magnetic pole 21, a bobbin 24 arranged around the reversible magnet 23, and a coil 25 wound around the bobbin 24. A search coil 26 is disposed on the lower surface of the bobbin 24. The search coil 26 measures a change in magnetic flux in the direction of the central axis c, and is wound around the core member of the magnet clamp 11. In this embodiment, the magnetic pole 21 through which the central axis c passes and the non-reversible magnet 22 correspond to the core member.

The magnetic pole 21 is made of a ferromagnetic body such as steel. The magnetic pole 21 and the reversible magnet 23 each have fastening holes 21a, 23a along the central axis c, and the fastening holes 21a, 23a are connected to each other. A bolt 8 is inserted from the front side of the plate 10 (the side that clamps the mold, the upper side in the figure) so as to pass through. The fastening holes 21a, 23a are through holes without threads.

The magnetic pole 21 receives the non-reversible magnet 22 along the wall of its outer circumferential side surface 21b. When the magnet clamp 11 is accommodated in the installation hole 13 of the plate 10, the non-reversible magnet 22 is arranged between the inner side surface 31a of the installation hole 13 and the outer circumferential side surface 21b of the magnetic pole 21.

The reversible magnet 23 is disposed on the rear side of the magnetic pole 21. The reversible magnet 23 forms a magnet whose magnetic polarity can be switched by the coil 25 wound around the reversible magnet 23. When the magnet clamp 11 is accommodated in the installation hole 13, the reversible magnet 23 is disposed between the bottom surface 31b of the installation hole 13 and the magnetic pole 21.

In FIG. 2C, the installation hole 13 is partially communicated to the communication hole 14. A terminal 25a of the coil 25 is made to appear in the communication hole by utilizing this communicating portion. Inside the communicating hole 14, the coil 25 is wired and the necessary control current is supplied. The communication hole 14 is provided at a predetermined angular position around the installation hole 13. In this embodiment, the communication holes 14 are selectively provided at angular positions of 0 degrees, 90 degrees, 180 degrees, and 270 degrees with respect to one installation hole 13 as the center (coincident with the central axis c). Other angular positions, for example every 60 degrees, may be used, but since the installation holes 13 need to be communicated with each other in the shortest possible time, there are limitations on the angular positions at which the communication holes 14 are provided.

In this embodiment, the magnetic flux passing through the reversible magnet 23 is made to pass inside a circle by the circular search coil 26. The search coil may be disposed directly below the sealant 5 so that the magnetic flux passing through the magnetic pole 21 passes through it. A number of search coils 26 are connected in series at the positions of the communication holes. The communication hole is also used to connect other electric circuits such as a proximity sensor (not shown). A lid 6 is attached to the communication hole so that it can be closed from the backside of the plate.

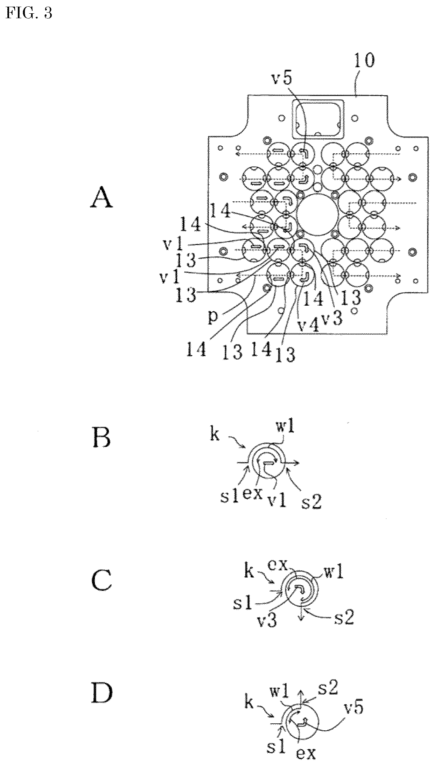

FIG. 3 is a view for explaining a conventional search coil k, and FIG. 3A shows a connection path between the plate 10 from which the magnet clamp 11 is removed and the conventional search coil k with broken lines. The communication holes 14 are bored in the plate 10 so as to span the installation holes 13. In addition, a thinly painted thick vector symbol v drawn on the installation hole 13 is a symbol symbolically represented so that the direction toward terminals s1 and terminals s2 (see FIGS. 3B to 3D) of the search coil k to be placed in that the installation hole 13 can be understood when the search coil k is connected in series.

The dashed lines indicate paths in which a plurality of installation holes 13 in which the search coils k forming one group are connected by wiring via the communication holes 14. The search coils k are arranged in a total of six groups, three groups on the right side and three groups on the left side of the plate 10. This grouping is arbitrary and any grouping may be used. In each group, a plurality of search coils k are connected in series by wiring via the communication holes 14. The controller 4 measures voltage changes detected in the series-connected groups.

In FIG. 3A, when focusing on a group p passing through the five installation holes 13 at the lower left of the drawing, the two vector symbols v1 drawn in the endmost installation hole 13 connected in series and the second installation hole 13 following this extend in the diametrical direction of the installation hole 13 (horizontal direction in the drawing). The vector symbols v3 and v4 drawn in the third and fourth installation holes 13 following the second installation hole extend while bending 90 degrees clockwise within the installation hole 13.

The magnet clamp 11 is accommodated in the installation hole 13, and FIGS. 3B to 3D show examples of how to wind the search coil k included in the magnet clamp 11. The search coil k is a one-tern coil. As shown in FIG. 3B, the search coil k, which is placed at the position where the vector symbol v1 or v2 extending in the diametrical direction (horizontal direction in the drawing) is drawn, has an extra conductor w1 of α (half circumference) which is less than one turn. The extra range is indicated by ex. This is because the terminals s1 and s2 cannot be placed on the diameter unless the conductor w1 of α is added and wound.

In the case of the search coil k, which extends clockwise by 90 degrees and is placed at the position where the vector symbol v3 is drawn, the conductor w1 having α as a quarter turn is further wound in order to connect to the terminal s2 (FIG. 3C). In the case of the search coil k placed at the position where the vector symbol v5 extending and bending 90 degrees counterclockwise is drawn, the conductor w1 is wound around 3/4 of a turn (FIG. 3D). In FIGS. 3B to 3D, the length of the conductor w1 added to one turn of the search coil k varies depending on the angular position relationship between the terminal s1 and the terminal s2. Even if the change in magnetic flux of the magnet clamp 11 caused by peeling of the mold is the same, differences in the conductor w1 result in differences in the electromotive force generated by the search coil k.

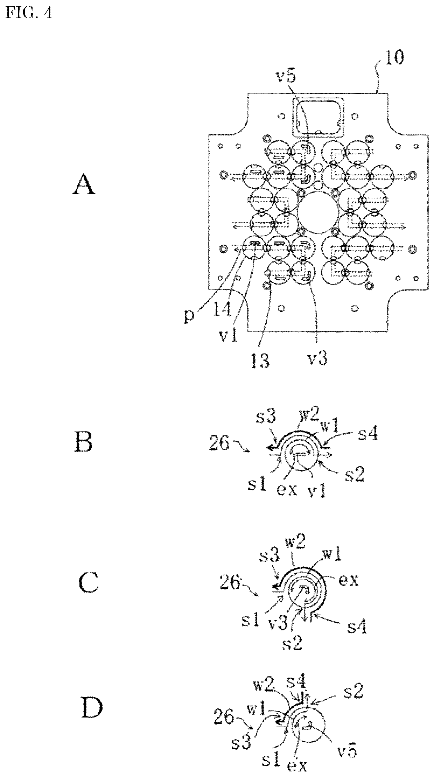

FIG. 4 is a view for explaining the search coil 26 according to this embodiment. FIG. 4A shows by dashed lines the connection path of the search coil 26 to be installed in the installation hole 13 according to this embodiment. As in FIG. 3, a total of six groups are arranged, three groups on the right side of the plate 10 and three groups on the left side. In FIG. 4A, when attention is focused on group p in the lower left of the drawing, the dashed lines differ from the example of FIG. 3A in that they have a route going back and forth through the installation hole 13 and the communication hole 14. The route going back and forth refers to an outward path that connects from the most upstream search coil 26 to the most downstream search coil 26, and a return path that turns around the outward path and connects from the most downstream search coil 26 to the most upstream search coil 26. The most upstream search coil 26 is closest to the controller 4, and the most downstream search coil 26 that turns around from the outward path to the return path is farthest from the controller 4. Each search coil 26 is provided such that an angular position of an outward terminal s1 of the search coil 26 is aligned with an angular position of the return terminal s3. In addition, in the route going back and forth, an angular position of the return terminal s4 is aligned with an angular position of the terminal s2. The search coils 26 present between the most upstream search coil 26 and the most downstream search coil 26 also have the same relationship between the terminals s1 to s4. The terminal s1 and the terminal s3 are provided side-by-side because they are wired through the same communication hole14. Further, the reason why the terminal s2 and the terminal s4 are provided side-by-side is because they are similarly wired through the same communication hole 14.

FIGS. 4B to 4D show examples of winding methods for the search coils 26. Each search coil 26 is a one-turn search coil, and corresponds to the search coil k in FIGS. 3B to 3D. The search coil 26 shown in FIG. 4B is disposed at the position where a vector symbol v extending in a diameter direction (horizontal direction in the drawing) is drawn in FIG. 4A. In this search coil 26, a half-turn conductor w2 indicated by a thick line is wound in the opposite direction on the return path so as to cancel an electromotive force generated in the half-turn conductor w1 (an excess range ex) on the outward path. In addition, in the case of a search coil placed at a position indicated by vector symbol v5 extending at a 90-degree bend clockwise, in FIG. 3C, a conductor w2, shown by a thick line, which is a 1/4 circumference, is added to the return path by being wound in the opposite direction so as to cancel the electromotive force generated in conductor w1 (the extra range ex), which is a 1/4 circumference, in the outward path. In FIG. 3D, in the case of the search coil placed at the position indicated by the vector symbol v5 extending at a 90-degree bend counterclockwise, a conductor w2 shown by a thick line and having a length of 3/4 of a circumference is added to the return path by being wound in the opposite direction so as to cancel the electromotive force generated in the conductor w1 (the extra range ex) having a length of 3/4 of a circumference in the outward path. Thus, in FIGS. 3B to 3D, the conductor w1 (an excess range ex) is wound in less than one turn on the outward path, whereas in FIGS. 4B to 4D, the conductor w2 is wound in the opposite direction on the return path.

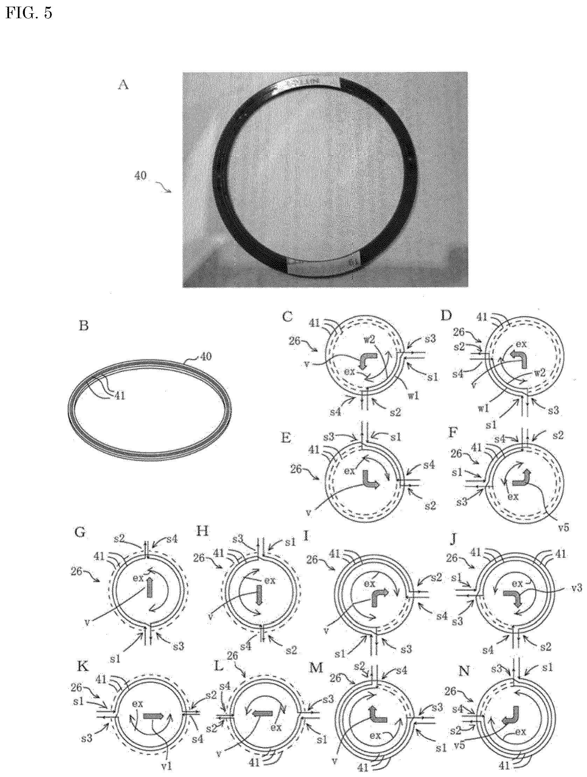

FIG. 5 shows a specific example of the search coil 26. FIG. 5A shows a ring-shaped substrate 40 used for the search coil 26, which is attached to the lower surface of a bobbin 24. As shown in FIG. 5B, three ring-shaped conductor patterns 41 are printed on the substrate 40 in a concentric manner. By subjecting the conductor patterns 41 to cutting and short-circuiting processes, a circuit that reciprocates within the substrate 40 can be created. FIGS. 5C to 5N show various search coils 26 made from the substrate 40, and the vector symbol v drawn at the center of each search coil is a symbolic symbol that allows understanding of the direction from the upstream terminal s1 of the outward path to the downstream terminal s2, as described above. In the example of each search coil 26 in FIGS. 4C to 4N, current flows clockwise in relation to the vector symbol v. In FIGS. 4C to 4N, broken lines indicate conductor patterns 41 that are cut (or separated from the path through which electricity flows).

On the outward path, a conductor pattern 41 equivalent to an additional α portion of conductor w1 (excess range ex) is left in one turn of the search coil and then cut, while on the return path, a conductor pattern 41 equivalent to α portion of conductor w2 is added in the opposite direction, thereby canceling out the extra induced voltage. The search coil 26, which allows current to flow counterclockwise, may have a mirror-symmetrical configuration with respect to the examples of FIGS. 4C to 4N.

In this way, when creating a one-turn search coil 26, by using a common substrate on which three ring-shaped conductor patterns are printed, the search coil 26 having outward and return paths can be created to correspond to all upstream and downstream positional relationships.

In the above embodiment, the search coil 26 has one turn, but it may have n turns (n is a natural number). In this case, the substrate 40 has a conductor pattern with n+2 turns. Although the substrate 40 is shown with a single layer conductor pattern, it can be a substrate with conductor patterns on both sides, or a substrate with multiple wiring layers.

As described above, according to this embodiment, in the outward path of the search coil 26, the conductor w1 of length α is added to one or n turns, while in the return path, the conductor w2 is wound in the opposite direction by the same length α, thereby making it possible to cancel out the extra induced voltage. In this embodiment, one or more turns of coil are shown wound in the outward path, but it is also possible to wind one or more turns in the return path.

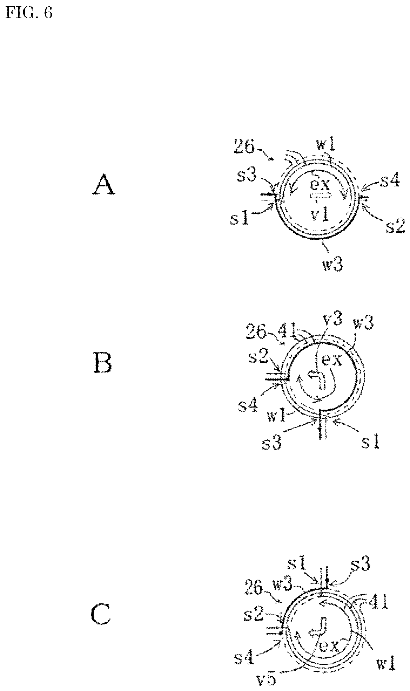

FIG. 6 shows another embodiment.

In the previous embodiment, the conductor w1 of length α was added to 1 or n turns on the outward path of the search coil 26, while the conductor w2 was wound in the opposite direction by the same length α on the return path to cancel out the extra induced voltage. In this embodiment, for the conductor w1 that has been wound for a length α less than one turn on the outward path (extra range ex), the conductor w3 is wound for a length of (1-α) turns in the same direction on the return path to complete one turn.

In the example of the search coil 26 shown in FIG. 6A, in which the vector symbol v1 extending in the major diameter direction is drawn, the conductor w1 (extra range ex) is wound for a half turn in addition to one turn on the outward path, and a half turn of conductor w3 shown by a bold line is wound in the forward direction and added on the return path. As a result, one turn of winding is added on the outward and return paths.

In addition, in FIG. 6B, in the case of the search coil 26 shown with a vector symbol v3 extending and bending 90 degrees clockwise, the conductor w3 shown in bold line corresponding to 3/4 of a turn on the return path is added by being wound in the forward direction to the conductor w1 (extra range ex) corresponding to 1/4 of a turn on the outward path. In FIG. 6C, in the case of the search coil 26 shown with a vector symbol v5 extending and bending 90 degrees counterclockwise, the conductor w3 shown in bold line corresponding to 1/4 of a turn on the return path is added by being wound in the forward direction to the conductor w1 (an extra range ex) corresponding to 3/4 of a turn on the outward path. In this manner, in FIGS. 6A to 6C, one turn is completed by winding the conductor w3 for (1-α) turns on the return path so that the total is one turn to the conductor w1 for α less than one turn additionally wound on the outward path. Similarly, for the search coils 26 represented by other vector symbols not shown in FIGS. 6A to 6C, one turn is completed by winding the conductor w3 for (1-α) turns on the return path so that the total is one turn to the conductor w1 for α less than one turn on the outward path.

In this embodiment as well, the search coil 26 has one turn on the outward path, but may have n turns (n is a natural number) on the outward path. In addition, in this embodiment, since the search coil 26 is wound in the same direction on both the outward and return paths, it can be generalized to have m turns + α on the outward path and k turns + (1-α) on the return path (m and k are natural numbers including 0). In FIG. 6, only the search coils 26 corresponding to the vector symbols v1, v3, and v5 are shown, but the same applies to other types of vector symbols v shown in FIG. 5.

In this embodiment, in the outward path of the search coil 26, the number of turns of any search coil can be equally aligned without half conductors by combining the extra conductors that are less than one turn in the outward and return paths to make one turn.

In this embodiment, one or more turns of the coil are wound on the outward path, but it is also possible to wind one or more turns on the return path, or to wind one or more turns of the coil on each of the outward and return paths.

As a modified example, although the conductor pattern is printed on the upper surface of a thin ring-shaped substrate 40, the conductor pattern may also be formed (by printing or attaching a conductor wire, etc.) on the outer or inner peripheral surface of the cylindrical substrate 40.

### DESCRIPTION OF REFERENCE NUMERAL

- 1: injection molding machine
- 2: platen
- 3: nozzle
- 4: controller
- 5: sealant
- 6: lid
- 7: ejector rod
- 8: bolt
- 9: guide rod
- 10: plate
- 11: magnet clamp
- 13: installation hole
- 14: communication hole
- 21: magnetic pole
- 22: non-reversible magnet
- 23: reversible magnet
- 24: bobbin
- 25: coil
- 26: search coil
- 40: substrate
- 41: conductor pattern

## Claims

1. A magnetic clamp device comprising: a plurality of magnet clamps each having a magnetic pole surrounded by a non-reversible magnet whose polarity cannot be reversed, and a reversible magnet whose polarity can be reversed disposed on a lower surface of the magnetic pole;
a plurality of search coils wound around core members of the plurality of magnet clamps, respectively;
a plate made of a magnetic body having a plurality of installation holes for accommodating the plurality of magnetic clamps and a plurality of communication holes extending across two adjacent installation holes; and
in which search coils accommodated in the installation holes are connected in series via the communication hole that straddles the installation holes,
wherein a connection path of the search coils connected in series includes an outward path connecting the most upstream search coil to the most downstream search coil, and a return path that turns around the outward path and connects the most downstream search coil to the most upstream search coil, and
wherein each search coil in the connection path has less than one turn of conductor connecting from an upstream terminal to a downstream terminal wound around a core member on the outward path, and a conductor corresponding to the less than one turn of conductor wound around the core member in a reverse direction on the return path.

2. The magnetic clamp device of claim 1, wherein the search coil is formed of a substrate on which at least three ring-shaped conductor patterns are formed, and the conductor are cut and short-circuited to form a conductor wound around the core member with at least one turn, the conductor of less than one turn connecting from the upstream terminal to the downstream terminal on the outward path, and the conductor wound around the core member in the reverse direction in the return path by an amount equivalent to the conductor of less than one turn.

3. A magnetic clamp device comprising:
a plurality of magnet clamps each having a magnetic pole surrounded by a non-reversible magnet whose polarity cannot be reversed, and a reversible magnet whose polarity can be reversed disposed on a lower surface of the magnetic pole;
a plurality of search coils wound around core members of the plurality of magnet clamps, respectively;
a plate made of a magnetic body having a plurality of installation holes for accommodating the plurality of magnetic clamps and a plurality of communication holes extending across two adjacent installation holes; and
in which search coils accommodated in the installation holes are connected in series via the communication hole that straddles the installation holes,
wherein a connection path of the search coils connected in series includes an outward path connecting the most upstream search coil to the most downstream search coil, and a return path that turns around the outward path and connects the most downstream search coil to the most upstream search coil, and
wherein each of the search coils has less than one turn of conductor connecting from an upstream terminal to a downstream terminal wound around a core member on the outward path, and a conductor in the forward direction equivalent to the shortage of less than one turn of conductor wound around the core member on the return path.
